# EUROPEAN PATENT APPLICATION

(11) **EP 4 826 558 A1**
(43) Date of publication of application: **21.10.2026**
(21) Application number: 26166576.4
(22) Date of filing: 20.03.2026
(51) Int. Cl.: G06F 13/42, G06F 13/12

(54) **METHOD AND APPARATUS FOR DEVICE DISCOVERY**

(30) Priority: 14.04.2025 US 202519177951
(71) Applicant: Allegro MicroSystems, LLC, Manchester, NH 03103 (US)
(72) Inventor: TRNKA, Miloslav, 147 00 Praha (CZ); PALA CAK, Ján, 250 90 Nové Jirny (CZ); BICÁK, Jan, 289 23 Milovice (CZ); SHEWMON, Nathan, 38114 Braunschweig (DE)
(74) Representative: South, Nicholas Geoffrey

(57) **Abstract**

A method for use in an electronic device, comprising: receiving a type-1 message, the type-1 message being received via a data bus; transitioning an analog terminal into a first state in which a signal that is output on the analog terminal has a first value; receiving a type-2 message on the data bus that includes an address that is available to be claimed; waiting for a random duration after receiving the type-2 message and then transmitting an acknowledgment for the type-2 message; monitoring traffic on the data bus to detect when or if any other acknowledgments are transmitted in response to the type-2 message; when the transmitted acknowledgement is the first or only acknowledgement to be transmitted in response to the type-2 message, claiming the address.

## Description

### BACKGROUND

As is known, sensors are used to perform various functions in a variety of applications. Some sensors include one or more magnetic field sensing elements, such as a Hall effect element or a magnetoresistive element, to sense a magnetic field associated with proximity or motion of a target object, such as a ferromagnetic object in the form of a gear or ring magnet, or to sense a current, as examples. Sensor integrated circuits are widely used in automobile control systems and other safety-critical applications. There are a variety of specifications that set forth requirements related to permissible sensor quality levels, failure rates, and overall functional safety.

### SUMMARY

According to aspects of the disclosure, a method is provided for use in an electronic device, the method comprising: receiving a type-1 message, the type-1 message being received via a data bus, the type-1 message being received at a digital communications interface of the electronic device, the type-1 message being transmitted to a default broadcast address for the data bus; transitioning an analog terminal of the electronic device into a first state in which a signal that is output on the analog terminal has a first value; receiving a type-2 message that includes an address that is available to be claimed, the type-2 message being received at the digital communications interface of the electronic device, the type-2 message being received via the data bus; waiting for a random duration after receiving the type-2 message and then transmitting an acknowledgment for the type-2 message on the data bus; monitoring traffic on the data bus to detect when or if any other acknowledgments are transmitted in response to the type-2 message; when the transmitted acknowledgement is the first or only acknowledgement to be transmitted in response to the type-2 message, claiming the address and transitioning the analog terminal from the first state into a second state in which the signal that is output on the analog terminal has a second value, and when the transmitted acknowledgement is not the first or only acknowledgement to be transmitted in response to the type-2 message, abstaining from claiming the address.

According to aspects of the disclosure, a method is provided for use in a computing device, comprising: broadcasting, on a data bus, a first type-1 message; broadcasting, on the data bus, a first type-2 message containing an address that is available to be claimed by one of a plurality of devices that are coupled to the data bus; detecting whether the address is claimed following the broadcast of the first type-2 message, the detecting being performed by using an analog input interface of the computing device, the analog input interface being coupled to a different respective analog output terminal of each of the plurality of devices, the detecting being performed by identifying whether any of the analog output terminals have transitioned from outputting a first signal value to outputting a second signal value, the second signal value being different from the first signal value; and detecting that the address has been successfully claimed when only one of the analog output terminals has transitioned from outputting the first signal value to outputting the second signal value.

According to aspects of the disclosure, an electronic device is provided, comprising: a digital communications interface; an analog communications interface including at least one analog terminal; and a controller configured to: receive, a type-1 message, the type-1 message being received via a data bus, the type-1 message being received at the digital communications interface, the type-1 message being transmitted to a default broadcast address for the data bus; transition the analog terminal into a first state in which a signal that is output on the analog terminal has a first value; receive a type-2 message that includes an address that is available to be claimed, the type-2 message being received at the digital communications interface, the type-2 message being received via the data bus; wait for a random duration after receiving the type-2 message and then transmit an acknowledgment for the type-2 message on the data bus; monitor traffic on the data bus to detect when or if any other acknowledgments are transmitted in response to the type-2 message; when the transmitted acknowledgement is the first or only acknowledgement to be transmitted in response to the type-2 message, claim the address and transition the analog terminal from the first state into a second state in which the signal that is output on the analog terminal has a second value, and when the transmitted acknowledgement is not the first or only acknowledgement to be transmitted in response to the type-2 message, abstain from claiming the address.

### BRIEF DESCRIPTION OF THE DRAWINGS

The foregoing features may be more fully understood from the following description of the drawings in which:
FIG. 1 is a diagram of an example of a system, according to aspects of the disclosure;
FIG. 2A is a sequence diagram of an example of a process, according to aspects of the disclosure;
FIG. 2B is a sequence diagram of an example of a process, according to aspects of the disclosure;
FIG. 2C is a sequence diagram of an example of a process, according to aspects of the disclosure;
FIG. 2D is a graph illustrating the analog outputs of sensors that are part of the system of FIG. 1.
FIG. 3A is a sequence diagram of an example of a process, according to aspects of the disclosure;
FIG. 3B is a sequence diagram of an example of a process, according to aspects of the disclosure;
FIG. 3C is a sequence diagram of an example of a process, according to aspects of the disclosure;
FIG. 3D is a graph illustrating the analog outputs of sensors that are part of the system of FIG. 1.
FIG. 4 is a flowchart of an example of a process, according to aspects of the disclosure;
FIG. 5 is a flowchart of an example of a process, according to aspects of the disclosure;
FIG. 6 is a diagram of an example of a message, according to aspects of the disclosure;
FIG. 7 is a diagram of an example of the payload of a message, according to aspects of the disclosure;
FIG. 8 is a diagram of an example of a sensor, according to aspects of the disclosure; and
FIG. 9 is a state diagram illustrating aspects of the operation of the sensor of FIG. 8, according to aspects of the disclosure.

### DETAILED DESCRIPTION

The Universal Asynchronous Receiver/Transmitter (UART) protocol can efficiently manage multiple sensors, supporting up to 126 slave devices. UART utilizes a master-slave architecture, where a single master device initiates communication with several devices connected to a UART bus. Each slave device is uniquely identified by a 7-bit address, with one address reserved for broadcast transmission to all devices on the UART bus.

In one aspect, the present disclosure introduces a communications protocol for assigning UART IDs to devices connected to a UART bus. The protocol utilizes analog connections parallel to the UART bus. In one example, these connected devices are sensors. The protocol allows each device to be assigned a unique UART ID. The protocol is managed by an electronic control unit (ECU) that is also connected to the UART bus. The assignment of unique UART IDs enables the connected devices to communicate with the ECU over the UART bus. The protocol may be executed during the initial configuration of the UART bus and may utilize both the UART bus and the parallel analog connections.

Although the protocol is presented in the context of UART, its application is not limited to being used within this specific bus architecture. The protocol may be used to assign addresses in any device architecture. Furthermore, the protocol can be used to assign an address to any electronic device, rather than sensors only.

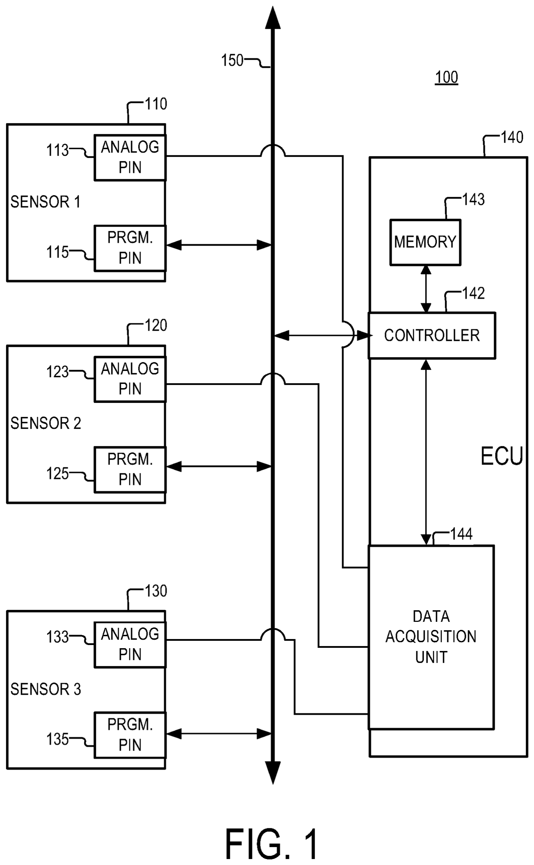

FIG. 1 shows a diagram of an example system (100) in accordance with various aspects of the disclosure. As illustrated, system 100 includes an electronic control unit (ECU) 140, a bus 150, and sensors 110, 120, and 130, all connected to ECU 140 via bus 150. In this example, bus 150 is a single-wire UART bus; however, the disclosure is not limited to any specific type of communication bus. The ECU 140 may include a controller 142, memory 143, and a data acquisition unit 144. Controller 142 may include a general-purpose processor, a special-purpose processor, application-specific circuitry, digital logic, or other suitable processing components. Memory 143 may include random-access memory (RAM), electrically erasable programmable read-only memory (EEPROM), or other appropriate memory types. The data acquisition unit 144 may include an analog input interface for receiving analog signals from sensors 110, 120, and 130. Each sensor may include a respective programming pin and an analog pin. The programming pin for each sensor may be connected to bus 150, while the analog pin is linked to the data acquisition unit 144 via a separate line. Specifically, sensor 110 may include a programming pin 115 connected to bus 150; sensor 120 may include a programming pin 125 connected to bus 150; and sensor 130 may include a programming pin 135 connected to bus 150. Additionally, sensor 110 may include an analog pin 113 connected to the first port of the data acquisition unit 144, sensor 120 may include an analog pin 123 connected to the second port, and sensor 130 may include an analog pin 133 connected to the third port of the data acquisition unit 144.

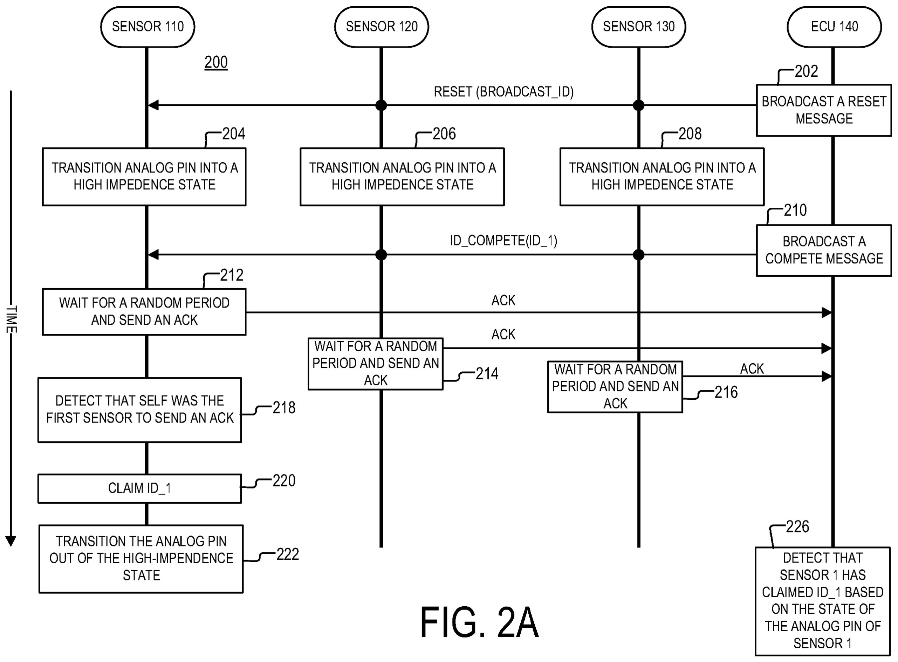

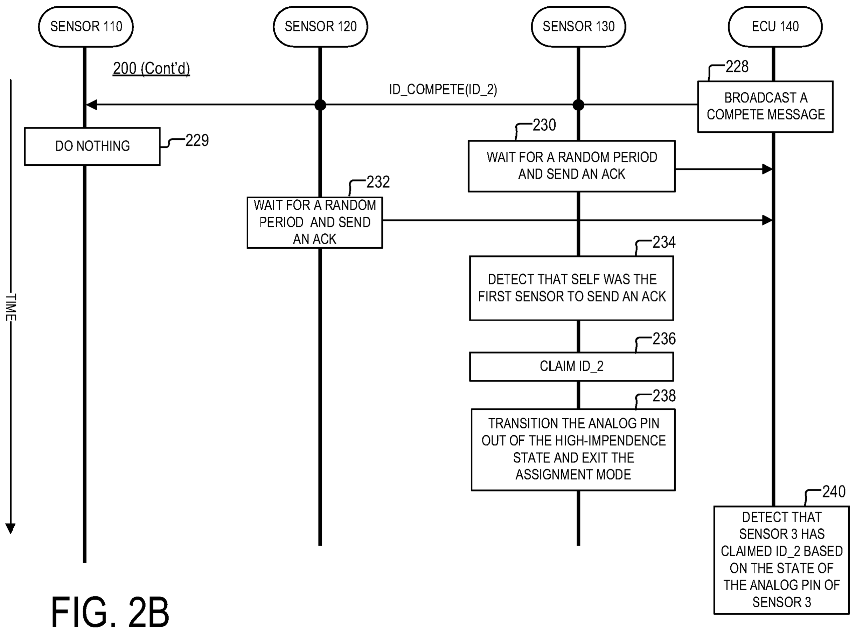

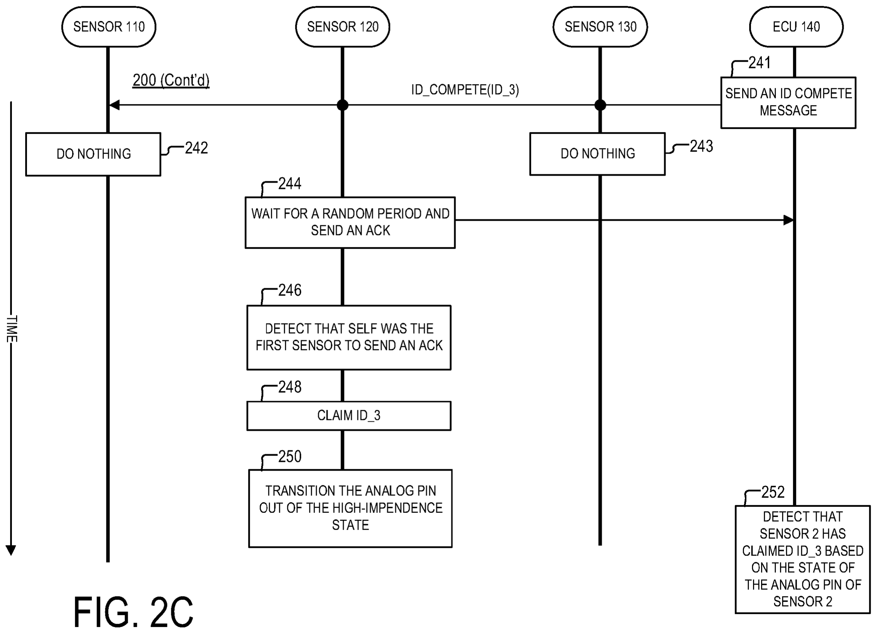

FIGS. 2A-C are sequence diagrams illustrating an example of a process 200, according to various aspects of the disclosure. These figures depict the workflow of a protocol for assigning addresses to devices connected to a bus (hereinafter referred to as "the address assignment protocol") when no collisions occur.

At step 202, ECU 140 broadcasts a reset message to each of the sensors 110, 120, and 130. This reset message is transmitted via bus 150 and sent to a dedicated broadcast address for bus 150.

At step 204, sensor 110 receives the reset message from step 202 and transitions analog pin 113 into a high-impedance state. In this example, when analog pin 113 is in the high-impedance state, sensor 110 outputs 0V.

At step 206, sensor 120 receives the reset message and transitions analog pin 123 into a high-impedance state. Similarly, when analog pin 123 is in this state, sensor 120 outputs 0V.

At step 208, sensor 130 receives the reset message and transitions analog pin 133 into a high-impedance state. In this case, when analog pin 133 is in the high-impedance state, sensor 130 outputs 0V.

At step 210, ECU 140 broadcasts a compete message to each of the sensors 110, 120, and 130. The compete message is transmitted to the dedicated broadcast address via bus 150. The compete message includes a first address (i.e., ID_1) that is available for one of the devices connected to bus 150, which do not yet have an assigned ID (e.g., sensors 110, 120, and 130). After being transmitted, the compete message is received by each of the sensors.

At step 212, sensor 110 waits for a random period before transmitting an acknowledgment to the compete message that was broadcast at step 210. This acknowledgment may include an ACK message sent on bus 150 to ECU 140. The acknowledgment can also include a unique identifier for the compete message, which is retrieved from the compete message itself.

At step 214, sensor 120 similarly waits for a random period before sending an acknowledgment to the compete message broadcast at step 210. Like sensor 110, it may transmit an ACK message on bus 150 to ECU 140 and include a unique identifier retrieved from the compete message.

At step 216, sensor 130 follows the same procedure, waiting for a random period to transmit its acknowledgment for the compete message from step 210. Again, the acknowledgment may include an ACK message sent to ECU 140 along with a unique identifier from the compete message. It should be noted that the random period waited by each of sensors 110, 120, and 130 before transmitting an acknowledgement to the compete message (broadcast at step 210) is chosen independently by each device. In this regard, according to the present disclosure, it is determined that in all but 0.3 percent of the cases, each of sensors 110, 120, and 130 would pick a different waiting period.

At step 218, sensor 110 monitors the traffic on bus 150 and detects that it is the first device among all connected devices to send an acknowledgment for the compete message broadcast at step 210.

At step 220, sensor 110 claims the address contained in the compete message (broadcast at step 210). In this case, sensor 110 claims the address of ID_1, which involves storing the address in its memory and/or entering a state where it recognizes all messages broadcast on bus 150 that contain the address ID_1 as directed to itself.

At step 222, sensor 110 transitions its analog pin 113 out of the high-impedance state. When analog pin 113 is transitioned out of the high-impedance state, sensor 110 begins outputting a voltage of 2.5V.

At step 226, ECU 140 uses the data acquisition unit 144 to monitor the voltage output on the respective analog pins of the devices connected to bus 150 *(i.e.,* sensors 110, 120, and 130). As a result of this monitoring, ECU 140 detects that the voltage on the analog pin 113 of sensor 110 has increased from 0V to 2.5V. In response to this change, ECU 140 concludes that the address in the compete message (broadcast at step 210) has now been claimed by sensor 110. In some implementations, ECU 140 may store an indication in memory 143 that the device with address ID_1 is also connected to ECU 140 at the first port of the data acquisition unit. This indication allows ECU 140 to correlate the analog information received from sensor 110 with the digital transmissions over bus 150. The ability to draw this correlation may enable ECU 140 to respond over bus 150 to information received from the analog output pin 113 of sensor 110.

At step 228, ECU 140 broadcasts a compete message to each of the sensors 110, 120, and 130. The compete message is transmitted to the dedicated broadcast address via bus 150. The compete message includes a second address (i.e., ID_2) that is available for one of the devices connected to bus 150, which do not yet have an assigned ID (e.g., sensors 120 and 130). After being transmitted, the compete message is received by each of sensors 120 and 130.

At step 229, sensor 110 does nothing because it already has an assigned address.

At step 230, sensor 130 waits for a random period before transmitting an acknowledgment to the compete message that was broadcast at step 210. This acknowledgment may include an ACK message sent on bus 150 to ECU 140. The acknowledgment can also include a unique identifier for the compete message, which is retrieved from the compete message itself. It should be noted that the random period waited by each of sensors 120 and 130 before transmitting an acknowledgement to the compete message (broadcast at step 210) is chosen independently by each device.

At step 232, sensor 120 similarly waits for a random period before sending an acknowledgment to the compete message broadcast at step 228. Like sensor 130, it may transmit an ACK message on bus 150 to ECU 140 and include a unique identifier retrieved from the compete message.

At step 234, sensor 130 monitors the traffic on bus 150 and detects that it is the first device among all connected devices to send an acknowledgment for the compete message broadcast at step 210.

At step 236, sensor 130 claims the address contained in the compete message (broadcast at step 228). In this case, sensor 130 claims the address of ID_2, which involves storing the address in its memory and/or entering a state where it recognizes all messages broadcast on bus 150 that contain the address ID_2 as directed to itself.

At step 238, sensor 130 transitions its analog pin 133 out of the high-impedance state. When analog pin 133 is transitioned out of the high-impendence state, sensor 130 begins outputting a voltage of 2.5V.

At step 240, ECU 140 uses the data acquisition unit 144 to monitor the voltage output on the respective analog pins of the devices connected to bus 150 *(i.e.,* sensors 110, 120, and 130). As a result of this monitoring, ECU 140 detects that the voltage on the analog pin 133 of sensor 130 has increased from 0V to 2.5V. In response to this change, ECU 140 concludes that the address in the compete message (broadcast at step 228) has now been claimed by sensor 130. In some implementations, ECU 140 may store an indication in memory 143 that the device with address ID_2 is also connected to ECU 140 at the third port of the data acquisition unit. This indication allows ECU 140 to correlate the analog information received from sensor 130 with digital transmissions over bus 150. The ability to draw this correlation may enable ECU 140 to respond over bus 150 to information received from the analog output pin 133 of sensor 130.

At step 241, ECU 140 broadcasts a compete message to each of the sensors 110, 120, and 130. The compete message is transmitted to the dedicated broadcast address via bus 150. The compete message includes a third address (i.e., ID_3) that is available for one of the devices connected to bus 150, which do not yet have an assigned ID (e.g., sensor 130). After being transmitted, the compete message is received by each of sensors 120 and 130.

At step 242, sensor 110 does nothing because it already has an assigned address (*i.e.,* ID_1).

At step 243, sensor 130 does nothing because it already has an assigned address (*i.e.,* ID_2).

At step 244, sensor 120 waits for a random period before transmitting an acknowledgment to the compete message that was broadcast at step 241. This acknowledgment may include an ACK message sent on bus 150 to ECU 140. The acknowledgment can also include a unique identifier for the compete message, which is retrieved from the compete message itself.

At step 246, sensor 120 monitors the traffic on bus 150 and detects that it is the first device among all connected devices to send an acknowledgment for the compete message broadcast at step 210.

At step 248, sensor 120 claims the address contained in the compete message (broadcast at step 241). In this case, sensor 120 claims the address of ID_3, which involves storing the address in its memory and/or entering a state where it recognizes all messages broadcast on bus 150 that contain the address ID_3 as directed to itself.

At step 250, sensor 120 transitions its analog pin 123 out of the high-impedance state. When analog pin 123 is transitioned out of the high-impendence state, sensor 120 begins outputting a voltage of 2.5V.

At step 252, ECU 140 uses the data acquisition unit 144 to monitor the voltage output on the respective analog pins of the devices connected to bus 150 (*i.e.,* sensors 110, 120, and 130). As a result of this monitoring, ECU 140 detects that the voltage on the analog pin 123 of sensor 120 has increased from 0V to 2.5V. In response to this change, ECU 140 concludes that the address in the compete message (broadcast at step 241) has now been claimed by sensor 120. In some implementations, ECU 140 may store an indication in memory 143 that the device with address ID_3 is also connected to ECU 140 at the second port of the data acquisition unit. This indication allows ECU 140 to correlate the analog information received from sensor 120 with digital transmissions over bus 150. The ability to draw this correlation may enable ECU 140 to respond over bus 150 to information received from the analog output pin 123 of sensor 120.

In some implementations, ECU 140 may be a controller of an electronic system and/or machinery. In this regard, ECU 140 may execute an algorithm for controlling the electronic system and/or machinery that is at least in part based on input from sensors 110, 120, and 130.

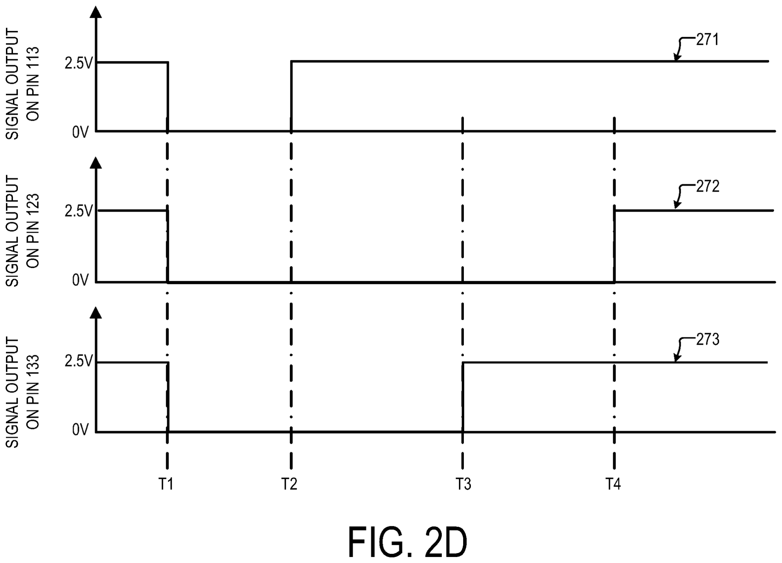

FIG. 2D is a graph illustrating the signals output from the analog pins of sensors 110, 120, and 130. This figure demonstrates how the states of these signals change during the execution of process 200, as shown in FIGS. 2A-C. In FIG. 2D, curves 271, 272, and 273 represent the signal outputs from pin 113 of sensor 110, pin 123 of sensor 120, and pin 133 of sensor 130, respectively. The times T1, T2, T3, and T4 are indicated on the graph. Time T1 marks when steps 204, 206, and 208 are executed, causing pins 113, 123, and 133 to transition into the high-impedance state. Time T2 indicates when step 222 is executed, transitioning pin 113 out of the high-impedance state to provide a signal for ECU 140 that sensor 110 has assumed the address communicated in the compete message transmitted at step 204. Time T3 occurs during step 238, when pin 133 exits the high-impedance state to signal for ECU 140 that sensor 130 has assumed the address from the compete message transmitted at step 228. Finally, time T4 represents when step 250 is executed, causing pin 123 to transition out of the high-impedance state to signal for ECU 140 that sensor 120 has assumed the address conveyed in the compete message transmitted at step 241.

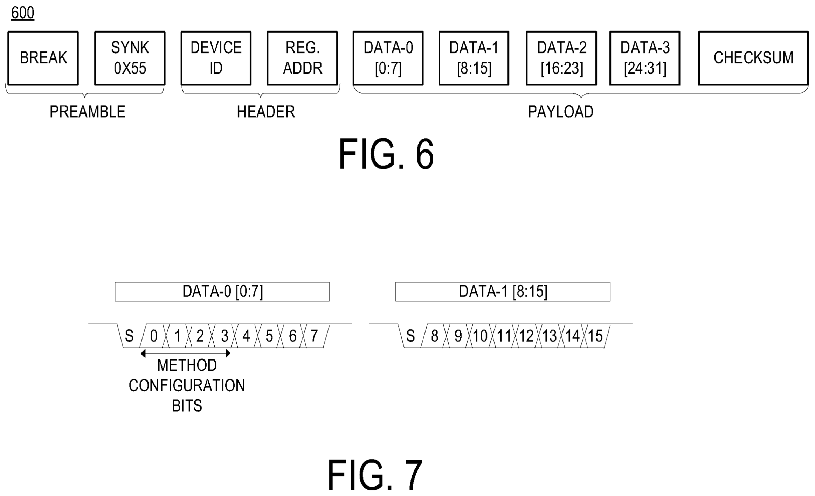

A brief discussion is now provided of the broadcast address used to transmit the compete and reset messages, which are discussed above with respect to FIGS. 2A-D. The broadcast address is a specific address that all devices on bus 150 recognize and respond to. It is a special address used in multi-drop (multi-device) communications, where ECU 140, acting as the master, communicates with sensors 110, 120, and 130, which act as slaves. In this example, the broadcast address is '127' and is inserted into the device ID field (as shown in FIG. 6) of the header of UART messages.

A brief discussion is now provided of the device-specific addresses that are assigned by using process 200 (*i.e.,* addresses ID_1, ID_2, and ID_3). The one-wire UART is a serial communications protocol that utilizes a register map for read and write access, serving as a simplified interface to the Local Interconnect Network (LIN) standard. In the case of one-wire UART, messages are transmitted as read and write commands. In the examples illustrated in FIGS. 2A-D, all messages (including the reset, compete, and acknowledgment messages/commands) are implemented as write commands. Each write command incorporates a 7-bit address contained within the device ID field of the message header (shown in FIG. 6). This address serves as an identifier for each device on the UART bus (e.g., sensors 110, 120, and 130) to recognize the messages intended for them. Typically, a device (e.g., one of the sensors) continuously monitors the traffic on the UART bus. When a message is transmitted, the device compares the address contained in the message with its own designated address (one of ID_1, ID_2, or ID_3). If the message address matches either the broadcast address or the device's own address, the device processes the message further; otherwise, it ignores the message.

While FIGS. 2A-D depict sensors connected to a UART bus, the address assignment protocol is not restricted to a specific type of bus. This protocol can be employed with any serial (e.g., single-wire) bus or any parallel (i.e., multi-wire) bus. Additionally, the address assignment protocol can be used to assign addresses to any devices connected to a bus that features an analog output pin. The current disclosure is not limited to any specific type of device being registered with the address assignment protocol.

The term "pin" is used for ease of explanation. It can refer to any point of electrical contact, such as a contact pad. Similarly, the term "terminal" encompasses any point of electrical contact. For instance, a terminal may include a pin, a contact pad, or any other suitable type of electrical connector. Each of the addresses discussed in relation to FIGS. 2A-D is a single-number address (or device ID). However, in alternative implementations, these addresses could also be formatted as a multi-number address, an alphanumeric string, or other variations. In summary, this disclosure is not limited to any specific address formatting.

In the example of FIGS. 2A-C, the receipt of a reset message causes any of sensors 110, 120, and 130 to transition its analog output to 0V. However, it will be understood that any other first voltage value can be used instead of 0V. In the example of FIGS. 2A-C, the analog output of each of sensors 110, 120, and 130 is transitioned to 2.5V to signal that the sensor has claimed an address. However, it will be understood that any other second voltage value can be used instead of 2.5V, for as long as the second voltage value is different from the first voltage value. In some implementations, the reset message (transmitted at step 202) may also re-initialize the pseudo-random number generator (PRNG) of each of sensors 110, 120, and 130. The PRNG of each of sensors 110, and 120, and 130 may be used to determine how long the sensor should wait before acknowledging a compete message. For example, the sensor may draw a random number between X and Y and wait for as many milliseconds as is the value of the drawn random number.

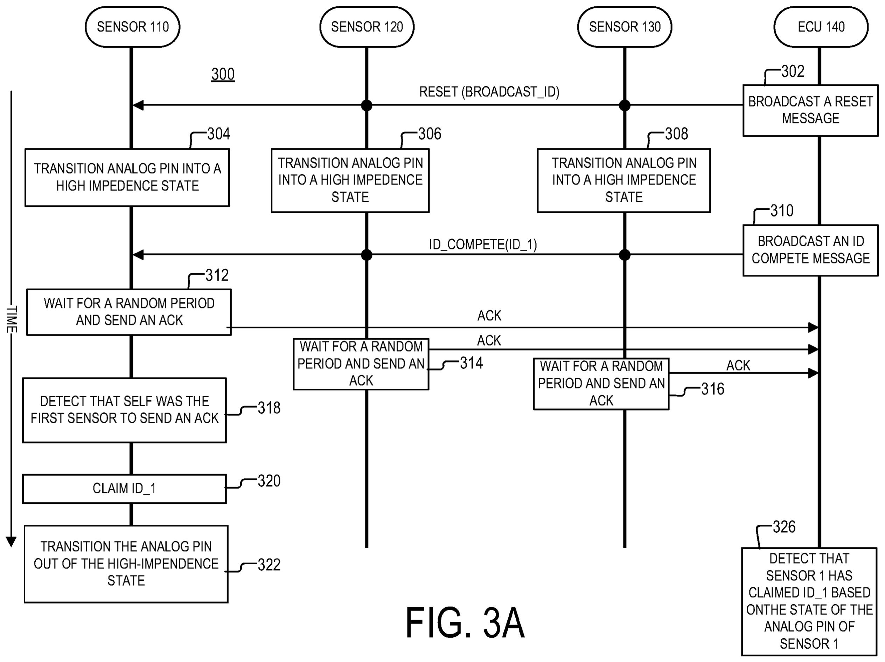

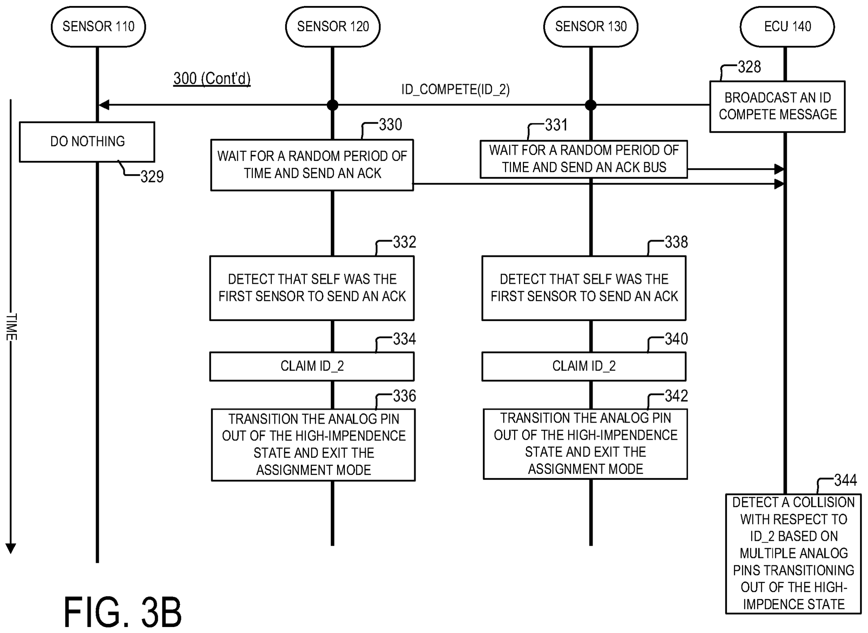

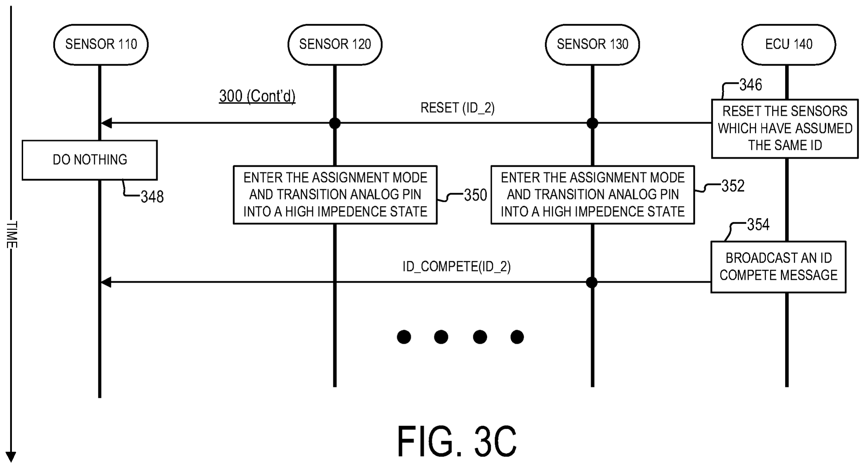

FIGS. 3A-C are sequence diagrams of an example of a process 300, according to aspects of the disclosure. FIGS. 3A-C illustrate the workflow of the address assignment protocol when a collision occurs in the address assignment.

At step 302, ECU 140 broadcasts a reset message to each of the sensors 110, 120, and 130. This reset message is transmitted via bus 150 and sent to the dedicated broadcast address for bus 150 (*e.g.,* '127').

At step 304, sensor 110 receives the reset message from step 302 and transitions analog pin 113 into a high-impedance state. In this example, when analog pin 113 is in the high-impedance state, sensor 110 outputs 0V.

At step 306, sensor 120 receives the reset message and transitions analog pin 123 into a high-impedance state. Similarly, when analog pin 123 is in this state, sensor 120 outputs 0V.

At step 308, sensor 130 receives the reset message and transitions analog pin 133 into a high-impedance state. In this case, when analog pin 133 is in the high-impedance state, sensor 130 outputs 0V.

At step 310, ECU 140 broadcasts a compete message to each of the sensors 110, 120, and 130. The compete message is transmitted to the dedicated broadcast address via bus 150. The compete message includes a first address (i.e., ID_1) that is available for one of the devices connected to bus 150, which do not yet have an assigned ID (e.g., sensors 110, 120, and 130). After being transmitted, the compete message is received by each of the sensors.

At step 312, sensor 110 waits for a random period before transmitting an acknowledgment to the compete message that was broadcast at step 310. This acknowledgment may include an ACK message sent on bus 150 to ECU 140. The acknowledgment can also include a unique identifier for the compete message, which is retrieved from the compete message itself.

At step 314, sensor 120 similarly waits for a random period before sending an acknowledgment to the compete message broadcast at step 310. Like sensor 110, it may transmit an ACK message on bus 150 to ECU 140 and include a unique identifier retrieved from the compete message.

At step 316, sensor 130 follows the same procedure, waiting for a random period to transmit its acknowledgment for the compete message from step 310. Again, the acknowledgement may include an ACK message sent to ECU 140 along with a unique identifier from the compete message. It should be noted that the random period waited by each of sensors 110, 120, and 130 before transmitting an acknowledgement to the compete message (broadcast at step 310) is chosen independently by each device. In this regard, according to the present disclosure, it is determined that in all but 0.3 percent of the cases, each of sensors 110, 120, and 130 would pick a different waiting period.

At step 318, sensor 110 monitors the traffic on bus 150 and detects that it is the first device among all connected devices to send an acknowledgment for the compete message broadcast at step 310.

At step 320, sensor 110 claims the address contained in the compete message (broadcast at step 210). In this case, sensor 110 claims the address of ID_1, which involves storing the address in its memory and/or entering a state where it recognizes all messages broadcast on bus 150 that contain the address ID_1 as directed to itself.

At step 322, sensor 110 transitions its analog pin 113 out of the high-impedance state. When analog pin 113 is transitioned out of the high-impedance state, sensor 110 begins outputting a voltage of 2.5V.

At step 326, ECU 140 uses the data acquisition unit 144 to monitor the voltage output on the respective analog pins of the devices connected to bus 150 (*i.e.,* sensors 110, 120, and 130). As a result of this monitoring, ECU 140 detects that the voltage on the analog pin 113 of sensor 110 has increased from 0V to 2.5V. In response to this change, ECU 140 concludes that the address in the compete message (broadcast at step 310) has now been claimed by sensor 110. In some implementations, ECU 140 may store an indication in memory 143 that the device with address ID_1 is also connected to ECU 140 at the first port of the data acquisition unit. This indication allows ECU 140 to correlate the analog information received from sensor 110 with the digital transmissions over bus 150. The ability to draw this correlation may enable ECU 140 to respond over bus 150 to information received from the analog output pin 113 of sensor 110.

At step 328, ECU 140 broadcasts a compete message to each of the sensors 110, 120, and 130. This compete message is transmitted via bus 150 to the dedicated broadcast address for that bus. The payload of the compete message includes a second bus address (i.e., ID_2) that is available for assignment. After transmission, each of the sensors 110, 120, and 130 receives the compete message.

At step 329, sensor 110 does nothing because it already has an assigned address (i.e., ID_1).

At step 330, sensor 120 waits for a random period before transmitting an acknowledgment of the compete message (broadcast at step 328). This acknowledgment includes an ACK message sent on bus 150 to ECU 140. The acknowledgment may include an identifier of the compete message that is retrieved from the compete message itself.

At step 331, sensor 130 also waits for a random period and then transmits its acknowledgment of the compete message in a similar fashion, with an ACK message sent on bus 150 to ECU 140. The acknowledgment may include an identifier of the compete message that is retrieved from the compete message itself. It is noted that the random wait times for sensors 120 and 130 are determined independently by each device.

In this scenario, sensor 130 sends its acknowledgment around the same time as sensor 120 because both sensors ended up selecting the same random wait time. Consequently, both sensors believe they were the first to send an acknowledgment, which causes both of them to claim the same bus address. This situation is referred to as a "collision."

At step 332, sensor 120 monitors the traffic on bus 150. Through this monitoring, it detects that it was the first device among all on bus 150 to transmit an acknowledgment of the compete message (broadcast at step 328).

At step 334, sensor 120 claims the address contained in the compete message. In this example, sensor 120 claims the address ID_2. Claiming this address involves storing it in the memory of sensor 120 and/or putting sensor 120 in a state where it recognizes messages broadcast on bus 150 containing the address ID_2 as directed to itself.

At step 336, sensor 120 transitions analog pin 123 out of the high-impedance state. In this example, when analog pin 123 transitions out of the high-impedance state, sensor 120 starts outputting 2.5V on analog pin 123.

At step 338, sensor 130 monitors the traffic on bus 150. During this monitoring, sensor 130 detects that it was the first device among all on bus 150 to transmit an acknowledgment of the compete message (broadcast at step 328).

At step 340, sensor 130 also claims the address from the compete message, which in this case is ID_2. This claim similarly involves storing the address in sensor 130's memory and/or transitioning into a state where sensor 130 recognizes messages with the address ID_2 as directed to itself.

At step 342, sensor 130 transitions analog pin 133 out of the high-impedance state. Here, when analog pin 133 transitions out of the high-impedance state, sensor 130 begins outputting 2.5V on analog pin 133.

At step 344, ECU 140 uses data acquisition unit 144 to monitor the voltage output on the respective analog pins of devices connected to bus 150. Through this monitoring, ECU 140 detects that the voltage on the analog pin of more than one sensor rises from 0V to 2.5V. This change indicates that multiple sensors have adopted the address transmitted in the compete message (broadcast at step 328), which is ID_2.

At step 346, ECU 140 transmits a reset message on bus 146. This message is sent to the address ID_2 (i.e., the address claimed by more than one sensor), identifying ID_2 as the intended recipient.

At step 348, sensor 110 does nothing because the reset message is not directed to the address it claims (i.e., ID_1) or to the dedicated broadcast address.

At step 350, sensor 120 receives the reset message (which was transmitted at step 346) and transitions analog pin 123 into a high-impedance state. When analog pin 123 is in the high-impedance state, sensor 120 starts outputting 0V on that pin. Additionally, sensor 120 may revert any changes made to its internal memory at step 334, which caused it to recognize ID_2 as its address.

At step 352, sensor 130 receives the same reset message (transmitted at step 346) and transitions analog pin 133 into a high-impedance state. Similarly, when analog pin 133 is in the high-impedance state, sensor 130 begins outputting 0V on that pin, and it may also undo any changes made to its internal memory at step 340 that caused it to recognize ID_2 as its address.

At step 354, ECU 140 broadcasts a compete message to each of the sensors: 110, 120, and 130. This compete message is transmitted via bus 150 to its dedicated broadcast address. The packet may include the second bus address (ID_2) within its payload. Each of the sensors-110, 120, and 130 receives the compete message, after which the compete message is processed in the same way as described in reference to FIGS. 2A-C.

In summary, the process described in FIGS. 3A-C involves the following: (i) a collision occurs when multiple devices claim the same address, (ii) the collision is detected when the analog pins of these devices change states from 'low' to 'high' at the same time (or change states in some manner), and (iii) the collision is resolved by sending a reset message to the address involved in the collision, after which the address assignment protocol returns to normal workflow.

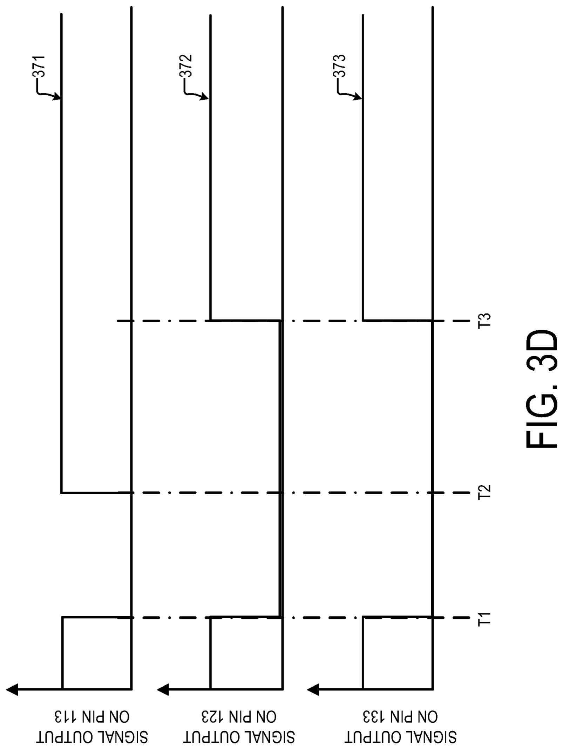

FIG. 3D is a graph illustrating the signals output on the analog pins of each of the sensors 110, 120, and 130. This graph is presented to demonstrate how the states of these signals change during the execution of process 300 (shown in FIGS. 3A-C). In FIG. 3D, the curves 371, 372, and 373 represent the signal output on pins 113, 123, and 133, respectively. The graph also indicates three specific times: T1, T2, and T3. Time T1 marks the execution of steps 304, 306, and 308, during which pins 113, 123, and 133 are transitioned into a high-impedance state. Time T2 marks when step 322 is executed, transitioning pin 113 out of the high-impedance state to signal that sensor 110 has assumed the address broadcast in the complete message transmitted at step 304. Finally, time T3 corresponds to the execution of steps 336 and 342, during which pins 123 and 133 are transitioned out of the high-impedance state. As mentioned earlier, when the output from the analog pins of multiple sensors rises from 0V to 2.5V, this signals to ECU 140 that a collision has occurred, indicating that the same address has been assumed by several sensors.

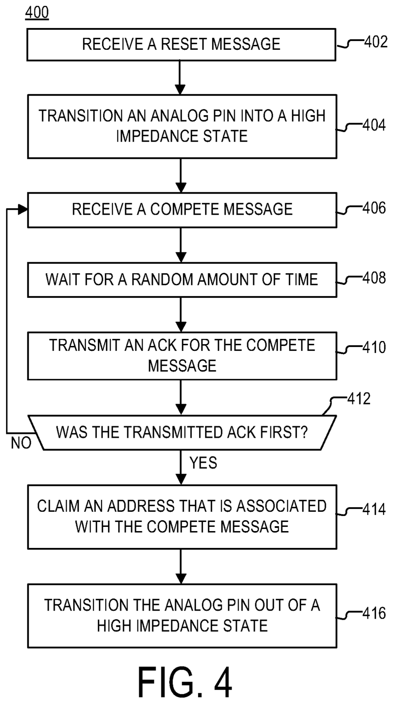

FIG. 4 is a flowchart of an example of a process 400, according to aspects of the disclosure. According to the present example, process 400 is performed by sensor 110. However, it will be understood that process 400 may be performed by one of sensors 120 and 130 and/or any other suitable type of device that is connected to bus 150. Process 400 illustrates the steps that are performed on the sensor side (or slave device side) as part of the address assignment protocol.

At step 402, sensor 110 receives a reset message. As noted above, the reset message may be a message that causes sensors (or other slave devices) to bring their analog pins into a first state, such as a high impedance state. The message may include a first opcode as part of its payload. The reset message is received on programming pin 115. The reset message is received via bus 150.

At step 404, sensor 110 transitions analog pin 113 into a high impedance state. This action involves lowering the voltage output on pin 113 to 0V.

At step 406, sensor 110 receives a compete message. As noted above, the compete message may include an address that is available to be claimed by one of the devices on bus 150. The compete message may include a second opcode that is different from the first opcode as part of its payload. In addition, the compete message may include, as part of its payload, the address that is available for assignment. The compete message is transmitted by ECU 140. The compete message is received on programming pin 115. The compete message is received via bus 150. The compete message is transmitted only to the broadcast address of bus 150.

At step 408, sensor 110 waits for a random amount of time. The duration of the waiting period may be determined by using a random number generator that is part of the processing circuitry (*e.g.,* microcontroller, *etc*.) of sensor 110.

At step 410, sensor 110 transmits, on bus 150, an acknowledgment to the compete message. The acknowledgement may be what is conventionally also referred to as an ACK message, and it may contain an identifier corresponding to the compete message and/or any other information that is uniquely attributable to the compete message, so as to signal that the compete message has been received successfully at sensor 110. The acknowledgement message is transmitted via programming pin 115 and on bus 150.

At step 412, sensor 110 determines if the acknowledgment (transmitted at step 410) was the first acknowledgement that was transmitted to the compete message on bus 150. It will be recalled that the compete message (received at step 406) is a broadcast message that is placed in bus 150 and it would normally be received by all sensors (or other devices) that are connected to bus 150. In this regard, at step 412, sensor 110 determines if it was the first device on bus 150 to respond to the compete message. The determination may be made by monitoring traffic on bus 150 to determine whether an acknowledgement for the compete message (received at step 406) was transmitted prior to step 410 being completed. If sensor 110 was the first device to respond to the compete message, process 400 proceeds to step 414. Otherwise, if sensor 110 was not the first to acknowledge the compete, process 400 returns to step 406.

At step 414, sensor 110 claims the address that is contained in the compete message (received at step 406). Claiming this address may include storing the address in a memory of sensor 110 and/or transitioning sensor 110 into a state in which sensor 110 recognizes as directed to itself all messages that are transmitted on bus 150 which contain the address.

At step 416, sensor 110 transitions the analog pin 113 out of the high-impedance state. As noted above, transitioning pin 113 out of the high-impedance state includes increasing the voltage that is being output on pin 113 from 0V to 2.5V.

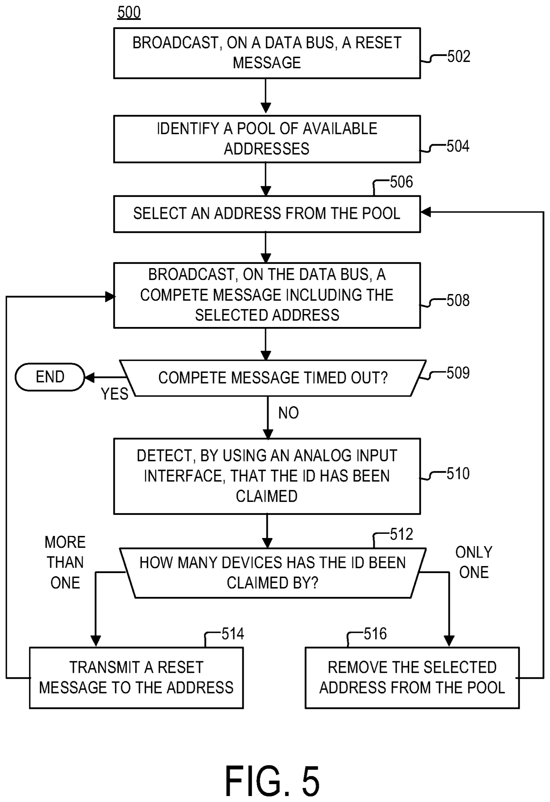

FIG. 5 is a flowchart of an example of a process 500, according to aspects of the disclosure. According to the present example, process 500 is performed by ECU 140. However, the present disclosure is not limited to any specific type of master device executing process 500. Process 500 illustrates the steps that are performed on the ECU side (or master device side) as part of the address assignment protocol.

At step 502, ECU 140 broadcasts a reset message on the bus 150. As noted above, the reset message may be a message that causes sensors (or other slave devices) to bring their analog pins into a high-impedance state (or another predetermined state). The message may include a first opcode, and it may be transmitted to the dedicated broadcasting address of bus 150.

At step 504, ECU 140 identifies a pool of available addresses. In one example, the pool of available addresses may be identified by examining a data structure that is stored in memory 143.

At step 506, ECU 140 selects an address from the pool.

At step 508, ECU 140 generates a compete message that includes the address (selected at step 506) and broadcasts the compete message on bus 150. The compete message may be transmitted to the dedicated broadcast address of bus 150. The compete message may be a message used to advertise that a particular address is available to be claimed by the "lucky" first device to transmit an acknowledgement. As part of its payload, the compete message may include a second opcode (different from the first opcode) and the address that is being advertised.

At step 509, ECU 140 determines if the compete message has timed out. According to the present example, ECU 140 detects whether at least one acknowledgment for the compete message is received within a predetermined time window. If no acknowledgments for the compete message are received during the time window, the compete message is determined to have timed out, and process 500 ends. If at least one acknowledgment for the compete message is received during the time window, the compete message is considered not timed out, and process 500 proceeds to step 510.

At step 510, ECU 140 detects whether the address (broadcast at step 508) has been claimed by any of the devices that are connected to the bus. As noted above, ECU 140 may monitor each of the analog signals that are received at the data acquisition unit 144 and detect whether one or more of the signals transition from a first value (*e.g.,* 0V) to a second value (*e.g.,* 2.5V). As noted above, the data acquisition unit 144 may include a plurality of pins, where each pin is coupled to the analog pin of a different one of sensors 110, 120, and 130. As a result of this arrangement, the analog outputs of sensors 110, 120, and 130 may be provided in parallel to the ECU 140, and ECU 140 may measure each analog output separately of the rest.

At step 512, ECU 140 determines the number of sensors (or other devices) that have claimed the address (broadcast at step 508). According to the present example, ECU 140 determines the count of analog signals received at the data acquisition unit 144 which have transitioned from the first value to the second value following the broadcast of the address at step 508. If only one signal has transitioned from the first value to the second value, ECU 144 determines that the address has been claimed by only one sensor (or other slave device), and process 500 proceeds to step 516. If more than one signal has transitioned from the first value to the second value, ECU 144 determines that the address has been claimed by more than one sensor (or other slave devices), and process 500 proceeds to step 514.

At step 514, ECU 140 transmits a reset message to the address (broadcast at step 508 and claimed by multiple devices). The reset message is transmitted on bus 150. It will be recalled that the reset message broadcast at step 502 includes the dedicated broadcast address as its recipient address. By contrast, the reset message transmitted at step 514 includes the address broadcast at step 508 as its recipient address. After the reset message is transmitted, process 500 returns to step 508.

At step 516, ECU 140 removes the address (selected at step 506) from the pool of available addresses. In one example, ECU 140 may delete the selected address from the data structure (or location in memory) used to implement the pool. In addition, at step 516, ECU 140 may store an indication in memory 143 that the device having the address advertised at step 508 is also connected to ECU 140 at the input port of the ECU that was found to have transitioned from the first value to the second value at step 512. This indication allows ECU 140 to correlate the analog information received from the device with digital transmissions over bus 150. The ability to draw this correlation may enable ECU 140 to respond over bus 150 to information received on the analog input interface (*e.g.,* data acquisition unit 144).

In the example of FIG. 5, ECU 140 detects that the address advertised in the compete message transmitted at step 508 has been claimed successfully when only of the analog signals provided at the data acquisition unit 144 transitions from a first value (*e.g.,* 0V) to a second value *(*e.g., 2.5V). If more than one signal transitions, ECU 140 may determine that a collision as occurred and execute the procedure discussed above. If none of the signals changes states (within a predetermined timeout window), ECU 140 may determine that an error has occurred. In this case, ECU may retransmit the compete message, end process 500, or handle the error in another way. The phrase "detecting that an address has been claimed successfully" may refer to abstaining to process the address further and/or taking an action to wrap up the processing of the address, such as removing the address from a pool of addresses that are available for claiming or mapping the address to a corresponding analog input port/pin. The term digital input interface may refer to a UART interface and or any input interface or input-output interface that is configured to receive digital communications that are transmitted over a bus. The term "data acquisition unit" may refer to any electronic circuitry that is configured receive analog input signals.

FIGS. 1-5 are provided as an example only. At least some of the steps in the processes discussed with respect to FIGS. 1-5 can be performed in parallel, performed in a different order, or altogether omitted.

In the example of FIGS. 1-5 sensors 110, 120, and 130 are assigned addresses as follows. ECU 144 sends a compete message containing an address that is available to be claimed. Each of the sensors waits for a random amount of time and then sends an acknowledgement to the compete message. The first sensor to send an acknowledgment to the compete message, claims the address contained in the compete message, while the other sensors wait for a new compete message to be sent with a different address. This process is repeated until each of the sensors or other devices on bus 150 has claimed the address.

In the example of FIGS. 1-5, when a compete message is broadcast by ECU 140, each of the sensors: (i) determines the value of a different random duration, (ii) waits for the random duration, and (iii) after the random waiting period has passed, transmits an acknowledgment to the compete message. In other words, in the example of FIGS. 1-5, each of the sensors that has not claimed an address would transmit an acknowledgement every time a new compete message is broadcast on bus 150.

However, in a preferred implementation, while each of the sensors is waiting, the sensor may monitor the traffic on bus 150. If the sensor senses that another one of the sensors (or other devices) on bus 150 has already sent an acknowledgment to the compete message, the sensor may just take itself out of the competition for the address broadcast in the compete message without transmitting an acknowledgment at all *-- i.e.,* the sensor may transition directly into a state in which it waits for the next compete message without transmitting an acknowledgment first. In other words, in this example, only the sensor (or other device) that has the shortest waiting time would transmit the acknowledgment, while the rest would not transmit an acknowledgment since they will sense that another device has already responded first and they are no longer eligible to claim the address broadcast in the compete message.

Moreover, the step of "detecting that the sensor was the first to transmit an acknowledgement" can be performed concurrently with the sensor waiting of a random period of and monitoring traffic on bus 150 to determine if it needs to transmit an acknowledgement at all. If this sensor gets to the point at which it transmits the acknowledgement, the sensor may determine that it was the first to send an acknowledgment to the compete message and it may claim the address advertised in the compete message accordingly.

In the above example, ECU 140 may determine that there is a collision when it receives multiple acknowledgments to the same compete message. On the other hand, in the above example, ECU 140 may determine that no collision has occurred when it receives only one acknowledgement to the compete message. In the example of FIGS. 1-5, all transmissions of reset messages, compete messages, and acknowledgments for compete message are preformed via the bus 150. Although the examples of FIGS. 1-5 are presented in the context of sensors claiming respective addresses, it will be understood that the devices claiming the addresses need not be sensors. In other words, in some implementations, any of sensors 110, 120, and 130 can be substituted with a different type of electronic device.

FIG. 6 is a diagram of an example of a UART message, according to aspects of the disclosure. The UART message may function as transport for the reset and compete messages that are discussed above. The UART message may include a preamble, a header, a payload, and a checksum fields. The preamble may include a break and sync fields. The header may include a device ID field and registered address field. The payload may include four bytes of data, which are enumerated DATA-0, DATA-1, DATA-2, DATA-3.

FIG. 7 is a diagram of the first two bytes of the payload of the message 600, according to aspect of the disclosure. When message 600 is a reset message (or used to transport a reset message), bits 0-5 may be set to the value of '10011'. When message 600 is a compete message (or used to transport a compete message) bits 0-4 may be set to a different value (or opcode). Moreover, when message 600 is a compete message (or used to transport a compete message) bits 8-15 may be set to the value of the address that is being advertised as available for claiming.

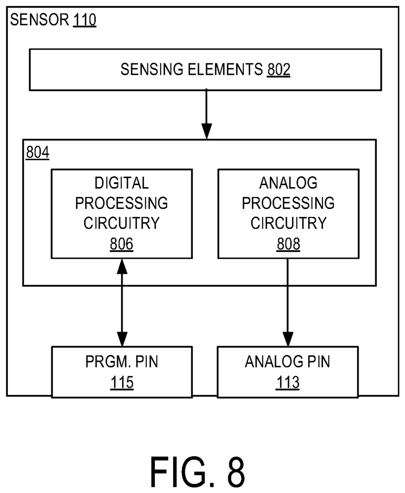

FIG. 8 is a diagram of sensor 110, according to aspects of the disclosure. Although FIG. 8 is provided in the context of sensor 110, it will be understood that each of sensors 120 and 130 may have the same or similar architecture. In the example of FIG. 8, sensor 110 includes sensing elements 802, electronic circuitry 804, the analog pin 113, and the programming pin 115.

Sensing elements 802 may include any suitable type of sensing element typically found in sensors. In this example, sensor 110 is a current sensor, and sensing elements 802 include magnetic field sensing elements. However, in alternative implementations, sensor 110 could be a different type of magnetic field sensor, such as a position sensor, angle sensor, or torque sensor. Additionally, sensor 110 might also be a different kind of sensor entirely, such as an acoustic sensor, optical sensor, pressure sensor, or any other appropriate sensor type. In such cases, sensing elements 802 may include one or more acoustic sensing elements, optical sensing elements, mechanical sensing elements, and so on. Therefore, this disclosure is not limited to any specific implementation of sensor 110 and/or sensing elements 802.

Electronic circuitry 804 may include a digital processing circuitry 806 and an analog processing circuitry 808.

Digital processing circuitry 806 may include a controller, such as one or more of a general-purpose processor, a special-purpose processor, an application-specific processor, digital logic, or any other suitable type of controller. Furthermore, digital processing circuitry 806 may include memory, such as random-access memory (RAM) and electronically erasable programmable read-only memory (EEPROM). Additionally, this circuitry may include a communications interface for transmitting and receiving data over bus 150. In this example, bus 150 is a UART bus, and the communications interface is a UART interface. However, in other implementations where bus 150 is a different type, the communications interface may vary accordingly. Thus, the disclosure is not constrained to a specific implementation of digital processing circuitry 806.

Analog processing circuitry 808 may include any appropriate type of analog circuitry typical in sensors. For example, it may include one or more amplifiers, filters, and circuitry for performing temperature compensation, offset adjustment, and gain adjustment on the output from sensing elements 802. Additionally, it may have circuitry to compensate for other environmental conditions, such as stress, and a signal driver for driving analog pin 113, and/or any other suitable type of circuitry. In some implementations, the driver together with the analog pin 113 may be part of an analog interface (e.g., analog output interface) of sensor 110.

As noted above, in one example, sensor 110 may be a current sensor and sensing elements 802 may be magnetic field sensing elements. Sensing elements 802 may be arranged to sense a magnetic field that is generated as a result of electrical current flowing through a conductor. Sensing elements 802 may generate a sensing signal in response to the magnetic field. The sensing signal may be received at analog processing circuitry 808 and possibly digital processing circuitry 806. The analog processing circuitry 808 may process the sensing signal to generate a processed signal. The processed signal may be a voltage signal whose level varies in proportion to the magnetic field that is sensed by sensing elements 802. The processed signal, in other words, may be indicative of the level of the electrical current that is flowing through the conductor.

When sensor 110 is in a first state, analog processing circuitry 808 may output the processed signal on analog pin 113. The processed signal may have any value between a specified upper and lower bound. When sensor 110 is in a second state, analog circuitry may output a feedback signal on the same analog pin 113. As noted above, the feedback signal can alternate between a first value and a second value, indicating when sensor 110 has successfully claimed an address that is advertised on bus 150 through a compete message.

In summary, analog pin 113 serves a dual purpose. The signal output on this pin can be used to: (i) report the level of a quantity measured by sensor 110, and (ii) indicate when sensor 110 has claimed an address for transmitting and receiving communications over bus 150. The reported quantities may include the position of a target, an electrical current level, the strength of a measured magnetic field (which corresponds to a moving target or electrical current), or any other relevant measurement. In an alternative implementation, the purpose of analog pin 113 may be limited to reporting whether an address has been claimed by sensor 110.

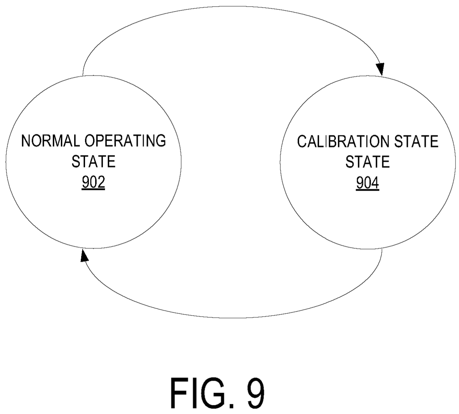

FIG. 9 is a state diagram illustrating the operation of sensor 110. As shown, sensor 110 can be in one of two states: a normal operating state (902) or a calibration state (904). In the normal operating state (902), sensor 110 uses analog pin 113 to report the level of the quantity being measured by the sensing elements (802). This quantity could represent various measures, such as the position of a target, the torque applied to a system, the level of electrical current through a conductor, pressure, light intensity, color, or any similar quantity. In this state, the voltage or current output on pin 113 can vary continuously and may take any value within a defined range. In contrast, when sensor 110 is in the calibration state (904), the signal output on pin 113 is used to indicate whether the sensor has acquired an address for communication over bus 150 or if it is still in the process of obtaining that address. During this calibration phase, the signal level on pin 113 shifts discretely between a first value (e.g., 0V) and a second value (2.5V), as discussed in relation to FIGS. 2A-5.

In the examples provided, the signal on pin 113 changes from a first value (0V) to a second value (2.5V) when sensor 110 indicates that it has claimed an address. In alternative implementations, the signal on pin 113 may transition from a first value (e.g., 0V) to one of several possible second values to indicate that the address has been claimed. This means that sensor 110 is not required to always transition to the same second value when claiming an address. For instance, in some implementations, the second value may be dictated by the magnetic field currently affecting sensing elements 802, and the change to this second value can be achieved by taking sensor 110 out of the high-impedance state. In other words, in some cases, the second value may be allowed to float.

While the examples suggest that pin 113 is transitioned to a high-impedance state to output the first value, the current disclosure is not restricted to any specific method for causing pin 113 to emit a predetermined first value. Additionally, the first value does not have to be 0V.

For instance, sensor 110 may transition from state 902 to state 904 in response to receiving a reset message. Alternatively, it may transition from state 902 to state 904 upon receiving another signal on an input pin (not shown) of sensor 110. Furthermore, sensor 110 may also transition from state 902 to state 904 when it is placed in a zero-field chamber during a calibration procedure performed at the factory. In another scenario, sensor 110 could transition from state 902 to state 904 after a predetermined waiting period following the assumption of an address. Conversely, sensor 110 may revert from state 904 to state 902 in response to receiving a specific message on bus 150 or when it receives a signal on an input pin (not shown) of sensor 110.

FIGS. 1-9 are provided as an example only. Throughout the disclosure, like reference numerals refer to like parts. The examples provided with respect to FIGS. 1-9 are not mutually exclusive and may be combined, modified, or adapted in various ways by those skilled in the art without departing from the scope and spirit of the invention defined by the appended claims.

The concepts and ideas described herein may be implemented, at least in part, via a computer program product, (e.g., in a non-transitory machine-readable storage medium such as, for example, a non-transitory computer-readable medium), for execution by, or to control the operation of, data processing apparatus (e.g., a programmable processor, a computer, or multiple computers). Each such program may be implemented in a high-level procedural or object-oriented programming language to work with the rest of the computer-based system. However, the programs may be implemented in assembly, machine language, or Hardware Description Language. The language may be a compiled or an interpreted language, and it may be deployed in any form, including as a stand-alone program or as a module, component, subroutine, or another unit suitable for use in a computing environment. A computer program may be deployed to be executed on one computer or multiple computers at one site or distributed across multiple sites and interconnected by a communication network. A computer program may be stored on a non-transitory machine-readable medium that is readable by a general or special purpose programmable computer for configuring and operating the computer when the non-transitory machine-readable medium is read by the computer to perform the processes described herein. For example, the processes described herein may also be implemented as a non-transitory machine-readable storage medium, configured with a computer program, where upon execution, instructions in the computer program cause the computer to operate in accordance with the processes. A non-transitory machine-readable medium may include but is not limited to a hard drive, compact disc, flash memory, non-volatile memory, or volatile memory. The term unit *(e.g.,* a addition unit, a multiplication unit, *etc*.), as used throughout the disclosure may refer to hardware (e.g., an electronic circuit) that is configured to perform a function (*e.g.,* addition or multiplication, *etc*.), software that is executed by at least one processor, and configured to perform the function, or a combination of hardware and software.

According to the present disclosure, a magnetic field sensing element can include one or more magnetic field sensing elements, such as Hall effect elements, magnetoresistance elements, or magnetoresistors, and can include one or more such elements of the same or different types. As is known, there are different types of Hall effect elements, for example, a planar Hall element, a vertical Hall element, and a Circular Vertical Hall (CVH) element. As is also known, there are different types of magnetoresistance elements, for example, a semiconductor magnetoresistance element such as Indium Antimonide (InSb), a giant magnetoresistance (GMR) element, for example, a spin valve, an anisotropic magnetoresistance element (AMR), a tunneling magnetoresistance (TMR) element, and a magnetic tunnel junction (MTJ). The magnetic field sensing element may be a single element or, alternatively, may include two or more magnetic field sensing elements arranged in various configurations, e.g., a half bridge or full (Wheatstone) bridge. Depending on the device type and other application requirements, the magnetic field sensing element may be a device made of a type IV semiconductor material such as Silicon (Si) or Germanium (Ge), or a type III-V semiconductor material like Gallium-Arsenide (GaAs) or an Indium compound, e.g., Indium-Antimonide (InSb).

Having described preferred embodiments, which serve to illustrate various concepts, structures and techniques, which are the subject of this patent, it will now become apparent that other embodiments incorporating these concepts, structures and techniques may be used. Accordingly, it is submitted that the scope of the patent should not be limited to the described embodiments but rather should be limited only by the spirit and scope of the following claims.

## Claims

1. A method for use in an electronic device, the method comprising:
receiving a type-1 message, the type-1 message being received via a data bus, the type-1 message being received at a digital communications interface of the electronic device, the type-1 message being transmitted to a default broadcast address for the data bus;
transitioning an analog terminal of the electronic device into a first state in which a signal that is output on the analog terminal has a first value;
receiving a type-2 message that includes an address that is available to be claimed, the type-2 message being received at the digital communications interface of the electronic device, the type-2 message being received via the data bus;
waiting for a random duration after receiving the type-2 message and then transmitting an acknowledgment for the type-2 message on the data bus;
monitoring traffic on the data bus to detect when or if any other acknowledgments are transmitted in response to the type-2 message;
when the transmitted acknowledgement is the first or only acknowledgement to be transmitted in response to the type-2 message, claiming the address and transitioning the analog terminal from the first state into a second state in which the signal that is output on the analog terminal has a second value, and
when the transmitted acknowledgement is not the first or only acknowledgement to be transmitted in response to the type-2 message, abstaining from claiming the address.

2. The method of claim 1, wherein the analog terminal is used to report whether the electronic device has claimed any of addresses that are advertised by type-2 messages transmitted on the data bus.

3. The method of claim 2, wherein the electronic device includes a sensor and the analog terminal is further used to report a level of a quantity that is measured by the sensor.

4. The method of claim 1, wherein the electronic device includes one of a current sensor, a position sensor, an angle sensor, or a torque sensor.

5. The method of claim 1, wherein the type-1 message includes a reset message, the type-2 message includes a compete message, and the first state includes a high impedance state.

6. The method of claim 1, wherein the type-2 message includes a message identifier of the type-2 message and the acknowledgment includes the message identifier of the type-2 message.

7. The method of claim 1, wherein the type-1 message and the type-2 message are transmitted by an electronic control unit (ECU) and the analog terminal is coupled to a data acquisition unit of the of the ECU.

8. A method for use in a computing device, comprising:
broadcasting, on a data bus, a first type-1 message;
broadcasting, on the data bus, a first type-2 message containing an address that is available to be claimed by one of a plurality of devices that are coupled to the data bus;
detecting whether the address is claimed following the broadcast of the first type-2 message, the detecting being performed by using an analog input interface of the computing device, the analog input interface being coupled to a different respective analog output terminal of each of the plurality of devices, the detecting being performed by identifying whether any of the analog output terminals have transitioned from outputting a first signal value to outputting a second signal value, the second signal value being different from the first signal value; and
detecting that the address has been successfully claimed when only one of the analog output terminals has transitioned from outputting the first signal value to outputting the second signal value.

9. The method of claim 8, further comprising transmitting a second type-1 message to the address when more than one of the analog output terminals has transitioned from outputting the first signal value to outputting the second signal value.

10. The method of claim 8, further comprising transmitting a second type-1 message to the address when more than one of the analog output terminals has transitioned from outputting the first signal value to outputting the second signal value and broadcasting a second type-2 message that contains the address.

11. The method of claim 8, wherein each of the devices includes a sensor.

12. The method of claim 8, wherein the first type-1 message includes a reset message and the first type-2 message includes a compete message.

13. An electronic device, comprising:
a digital communications interface;
an analog communications interface including at least one analog terminal; and
a controller configured to:
receive, a type-1 message, the type-1 message being received via a data bus, the type-1 message being received at the digital communications interface, the type-1 message being transmitted to a default broadcast address for the data bus;
transition the analog terminal into a first state in which a signal that is output on the analog terminal has a first value;
receive a type-2 message that includes an address that is available to be claimed, the type-2 message being received at the digital communications interface, the type-2 message being received via the data bus;
wait for a random duration after receiving the type-2 message and then transmit an acknowledgment for the type-2 message on the data bus;
monitor traffic on the data bus to detect when or if any other acknowledgments are transmitted in response to the type-2 message;
when the transmitted acknowledgement is the first or only acknowledgement to be transmitted in response to the type-2 message, claim the address and transition the analog terminal from the first state into a second state in which the signal that is output on the analog terminal has a second value, and
when the transmitted acknowledgement is not the first or only acknowledgement to be transmitted in response to the type-2 message, abstain from claiming the address.

14. The electronic device of claim 13, or the method of claim 1 or 8, wherein the data bus includes a Universal Asynchronous Receiver/Transmitter (UART) bus, and the address includes a UART ID.

15. The electronic device of claim 13, or the method of claim 1, wherein claiming the address includes causing the electronic device to enter a state in which it recognizes any messages transmitted on the data bus to the address as being destined for the electronic device.

16. The electronic device of claim 13, or the method of claim 1, wherein the monitoring is performed concurrently with the waiting, and the acknowledgment to the type-2 message is transmitted only when no other acknowledgement to the type-2 message is transmitted during the waiting.
